# EUROPÄISCHE PATENTSCHRIFT

(11) **EP 1 638 111 B1**
(45) Veröffentlichungstag und Bekanntmachung des Hinweises auf die Patenterteilung: **20.06.2007**
(21) Anmeldenummer: 05017099.2
(22) Anmeldetag: 05.08.2005
(51) Int. Cl.: G21C 17/06

(54) **Messeinrichtung und Verfahren zur Vermessung eines Brennelements in einem Kernkraftwerk**
Device and method for measuring a fuel assembly in a nuclear plant
Dispositif et méthode pour la mesure d'un assemblage combustible dans une centrale nucléaire

(30) Priorität: 21.09.2004 DE 102004046052
(43) Veröffentlichungstag der Anmeldung: 22.03.2006
(73) Patentinhaber: AREVA NP GmbH, 91058 Erlangen (DE)
(72) Erfinder: Sturm, Rolf-Konrad, 91056 Erlangen (DE)
(74) Vertreter: Mörtel & Höfner

(56) Entgegenhaltungen:
- FR-A- 2 721 704
- US-A- 4 464 332
- US-B1- 6 549 600

## Beschreibung

Die Erfindung betrifft eine Messeinrichtung und ein Verfahren zur Vermessung eines Brennelements in einem Kernkraftwerk.

Durch ihren Einsatz im Leistungsreaktor eines Kernkraftwerks erfahren Brennelemente starke radioaktive Bestrahlung. Diese verursacht unter anderem Änderungen in der äußeren Geometrie der Brennelemente. Mögliche geometrische Verformungen der Brennelemente sind unter anderem Verbiegungen in der Längsachse und Verdrillungen um die Längsachse. Zu stark verformte Brennelemente müssen identifiziert werden, um Störungen im Reaktorbetrieb zu vermeiden. Deshalb müssen diese in regelmäßigen Abständen auf ihre geometrischen Maße hin untersucht werden. Hierzu sind verschiedene Verfahren bekannt.

Eine Möglichkeit ist, zwischen Brennelementkopf und -fuss auf einer Längsseite des Brennelements ein Seil zu spannen und mit Hilfe einer Unterwasserfernsehkamera, die über einen Linealvorsatz verfügt, die Höhe der Seilauslenkung orthogonal zur Oberfläche der Brennelementseite zu ermitteln. Hierbei wird also die sich dabei ergebende Sehnenlänge ermittelt. Mit diesen Verfahren kann zwar die Durchbiegung, nicht aber die Verdrillung eines Brennelements erfasst werden.

Andere z.B. aus der DE 199 45 930 bekannte Verfahren arbeiten mit zwei oder drei Abstandsmessaufnehmern, welche jeweils auf vier Seiten des Brennelementkastens oder jedes Abstandhalters auf geometrisch bekannten Bahnen entlang gefahren werden, und jeweils den Abstand vom Messaufnehmer zum Brennelement messen. Die Messaufnehmer müssen hierbei in einem Messbereich von mehreren Millimetern kalibriert werden. Mit einem derartigen Verfahren können Verbiegungen in der Längsachse und Verdrillungen um die Längsachse des Brennelements vermessen werden. Nachteil des Verfahrens ist, dass etliche Messaufnehmer eingesetzt werden müssen und vor jeder Messung jeder der Messaufnehmer kalibriert werden muss. Ein entsprechendes Messverfahren wird hierdurch aufwendig und teuer.

Zur Brennelementinspektion bzw. -manipulation sind in Kernkraftwerken ohnehin meist in drei Dimensionen verfahrbare Schlittensysteme mit Instrumententrägern fest installiert, auf welchen verschiedenste Mess- bzw. Manipulationsvorrichtungen montierbar sind. Derartige Schlittensysteme verfügen über Positionsaufnehmer, welche die Position des Instrumententrägers z.B. relativ zum Brennelementlagerbecken und damit zu einem darin fest montierten Brennelement erfassen.

Aus der US 4,464,332 ist eine Messeinrichtung bzw. ein Verfahren zur Vermessung eines Brennelements in einem Kernkraftwerk bekannt, welches eben diese Positionsaufnehmer zur Vermessung des Brennelements benutzt. Im wesentlichen wird hierbei auf dem Instrumententräger ein Taster montiert, welcher gegen einen Messpunkt am Brennelement verfahren wird. Der Taster erzeugt hierbei ein Schaltsignal, sobald sich der Instrumententräger an das Brennelement bis zu einem definierten Abstand angenährt hat. Die Verfahrbewegung des Instrumententrägers wird daraufhin gestoppt und die Positionsinformationen der am Instrumententräger bzw. dessen Verfahrsystems angeordneten Positionssensoren ausgelesen. Zur Vermessung eines Brennelements wird das Anfahren des Instrumententrägers jeweils in einer Richtung senkrecht zur Längsrichtung des Brennelements an dieses in verschiedenen Längspositionen des Brennelements wiederholt.

Durch das Anfahren des mechanischen Tasters an das Brennelement erfolgt jedoch eine Verformung oder Verschiebung des Brennelements durch Andrücken des Tasters am Messpunkt. Außerdem weist eine entsprechende Inspektionsvorrichtung einen gewissen mechanischen Nachlauf auf, nämlich zwischen der Auslösung des Schaltsignals vom Taster bis zum Stillstand des Instrumententrägers bzw. der gesamten Inspektionseinrichtung. Dieser Nachlauf führt zu weiteren Ungenauigkeiten bei der Vermessung des Brennelements.

Aufgabe der vorliegenden Erfindung ist es, eine verbesserte Messeinrichtung und ein entsprechendes Messverfahren zur Vermessung eines Brennelements anzugeben.

Hinsichtlich der Messeinrichtung wird die Aufgabe gelöst durch eine Messeinrichtung zur Vermessung eines Brennelements in einem Kernkraftwerk, mit einer das Brennelement in einer Halterung fixierenden Inspektionseinrichtung, wobei die Inspektionseinrichtung einen relativ zur Halterung verfahrbaren Instrumententräger und einen an eine Recheneinrichtung angeschlossenen Positionsaufnehmer zur Ermittlung einer Position des Instrumententrägers relativ zur Halterung enthält. Auf dem Instrumententräger ist ein Signalgeber zur Abgabe eines Messsignals an die Recheneinrichtung bei Erreichen eines vorbestimmbaren Abstandes zwischen dem Instrumententräger und einem Messpunkt am Brennelement, montiert. Der Signalgeber enthält einen berührungslosen, ein Abstandssignal erzeugenden Abstandsgeber.

Eine entsprechende Inspektionseinrichtung ist üblicherweise in jedem Kernkraftwerk, und dort meist im Brennelementlagerbecken, fest installiert. Die Inspektionseinrichtung dient eben jeglicher Art und Weise der Inspektion eines Brennelements. Die Inspektionseinrichtung weist deshalb eine Halterung auf, in welcher das Brennelement fixierbar ist. Oft ist dieses in der Halterung um seine Längsachse drehbar, aber in jeder beliebigen Drehposition arretierbar, gelagert. Derartige Inspektionseinrichtungen weisen darüber hinaus, meist gelagert auf einem in drei Dimensionen verfahrbaren Schlittensystem einen Instrumententräger auf, welcher zu Aufnahme verschiedenster Beobachtungs-, Prüf- oder Messeinrichtungen wie Kameras, Lampen, Manipulatoren, Greifern usw. geeignet ist.

Der Instrumententräger kann somit in allen drei Raumrichtungen bezüglich des fixierten Brennelements verfahren werden. Um an einem, sich außerhalb des strahlungsgefährdeten Bereichs, z.B. in einer Leitwarte befindenden Steuerpult über die derzeitige Position des Instrumententrägers informiert zu sein, ist dieser, bzw. das den Instrumententräger an der Inspektionseinrichtung verfahrende Schlittensystem mit Positionsaufnehmern ausgerüstet. Die im Brennelementlagerbecken fest installierte Inspektionseinrichtung definiert somit ein ortsfest ruhendes Koordinatensystem, in dem auch das Brennelement ruht, wobei zu jedem Zeitpunkt die x-,y- und z-Koordinate des Instrumententrägers (bzw. eines Referenzpunktes an diesem) im Koordinatensystem bekannt ist. Die jeweiligen Koordinaten werden z.B. von entsprechenden Positionsaufnehmern an den x-,y- und z-Achsen des Schlittensystems aufgenommen.

Da es sich bei der Inspektionseinrichtung um eine im Kernkraftwerk üblicherweise fest installierte Einrichtung handelt, arbeiten die entsprechenden Positionsaufnehmer meist sehr genau. Bei der Durchführung von Messverfahren für Brennelemente nach dem Stand der Technik werden die entsprechenden Messeinrichtungen, z.B. Abstandsensoren auf dem Instrumententräger montiert und dieser auf einer bekannten Bahn, z.B. auf einer exakten Geraden, welche in etwa parallel zum Brennelement verläuft, verfahren (z-Achse), weshalb der somit ebenfalls auf einer Geraden verfahrene Abstandssensor einen je nach Verformung des Brennelements veränderlichen Abstand zu diesem misst. Der Positionsaufnehmer an der Inspektionseinrichtung dient somit lediglich zur Kontrolle bzw. Sicherstellung eines entsprechend präzisen Verfahrweges des Abstandsaufnehmers, wobei die Brennelementverformung wiederspiegelnden Messdaten vom Abstandssensor geliefert werden.

Wie aus der US 4,464,332 bekannt, werden die Messwerte nicht von einem Abstandssensor, sondern direkt vom Positionsaufnehmer der Inspektionseinrichtung ausgeleitet. Dies ist möglich, wenn zur Ermittlung der Position eines bestimmten Messpunktes am Brennelement die Inspektionseinrichtung so lange verfahren wird, bis diese eine definierte bzw. bekannte Position, also einen bekannten Abstand gegenüber dem Messpunkt einnimmt. Da nun über den Positionsaufnehmer zum einen die Position des Instrumententrägers im Koordinatensystem bekannt ist und zum anderen der (einem Offset vergleichbare) Abstand bzw. Versatz zum Messpunkt bekannt ist, ist auch die Position des Messpunktes am Brennelement berechenbar bzw. bekannt.

Um die definierte Position des Instrumententrägers gegenüber dem Messpunkt mit dem Instrumententräger anfahren zu können, ist deshalb erfindungsgemäß auf dem Instrumententräger ein berührungsloser, ein Abstandssignal erzeugender Abstandsgeber als Signalgeber montiert, welcher es ermöglicht, das Erreichen einer vorbestimmbaren, also bekannten Position bzw. eines derartigen Abstandes von Instrumententräger zum Messpunkt zu erkennen und daraus ein Messsignal abzuleiten. Dieses Messsignal wird mit anderen Worten als Schaltsignal benutzt, um im Moment seines Auftretens die aktuelle Position der Inspektionseinrichtung, welche vom Positionsaufnehmer erfasst wird, aus der Inspektionseinrichtung auszuleiten und als Messwert zu speichern. Über den bekannten Abstand zwischen Instrumententräger und Messpunkt kann in der Recheneinrichtung dann der genaue Ort des Messpunktes errechnet werden.

Durch die berührungslose Überwachung des Abstandes zwischen Inspektionseinrichtung und Messpunkt am Brennelement erfolgt keine Verformung oder Verschiebung durch Andrücken eines Signalgebers an den Messpunkt, weder am Brennelement noch an der Inspektionseinrichtung.

Der Signalgeber kann einen Schwellwertschalter enthalten, welcher bei einem vorgegebenen Abstandssignal das Messsignal erzeugt. Andernfalls wird das Messsignal als Abstandssignal an die Recheneinrichtung geführt und dort auf einen Schwellwertschalter geführt.

Als Signalgeber eignen sich einfachste berührungslose Sensoren, die ein binäres Signal als Messsignal abgeben. Hier sind verschiedenste Ausführungsformen denkbar wie z.B. berührungslose Schalter mit Gebern wie Induktivwegaufnehmern, Ultraschallaufnehmern oder kapazitiven Aufnehmern. Zusätzliche Positionsaufnehmer müssen nicht angebracht werden, da die bereits in der im Kernkraftwerk installierten Inspektionseinrichtungen fest vorhandenen Positionsaufnehmer benutzt werden. Die erfindungsgemäße Messeinrichtung wird daher unaufwendiger und preisgünstiger.

Wenn der Abstandsgeber ein Abstandssignal erzeugt bzw. an die Recheneinrichtung übermittelt, kann dieses kontinuierlich entweder im Signalgeber selbst, wie oben beschrieben, oder in der Recheneinrichtung überwacht werden. Der Signalgeber gibt dann kein binäres Signal, sondern z.B. ein digitales oder analoges Abstandsignal an die Recheneinrichtung ab. Erst dort wird hieraus das binäre Messsignal ("Null" oder "Eins") erzeugt. So kann z.B. bei Annäherung an den vorbestimmbaren Abstand die Inspektionseinrichtung bereits abgebremst werden, um den Abstand exakt zu erreichen. Auch kann so nach Stillstand des Instrumententrägers der tatsächliche Abstand zwischen Messpunkt und Instrumententräger bestimmt werden, welcher evtl. vom vorbestimmbaren Abstand geringfügig abweicht. Über das Abstandssignal erfolgt eine Feinkorrektur für die Messpunktsberechnung. Gegenüber dem Stand der Technik ergibt sich der Vorteil, dass das Abstandssignal des Abstandsgebers hier nur in einem wesentlich kleineren Bereich kalibriert sein muss, nämlich nur in einer kleinen Umgebung des vorbestimmbaren Abstandes, als bei einer Messung zwischen Instrumententräger und Brennelement.

Hinsichtlich des Verfahrens wird die Aufgabe gelöst durch ein Verfahren zur Vermessung eines Brennelements in einem Kernkraftwerk, bei dem das Brennelement in einer Halterung einer Inspektionseinrichtung fixiert wird, ein Instrumententräger der Inspektionseinrichtung relativ zum Brennelement verfahren wird, bei Erreichen eines vorbestimmbaren berührungslos überwachten Abstandes zwischen dem Instrumententräger und einem Messpunkt am Brennelement ein Messsignal an eine Recheneinrichtung übermittelt wird, bei Auftreten des Messsignals die Ortsposition des Instrumententrägers ermittelt und an die Recheneinrichtung übermittelt wird, und in der Recheneinrichtung die Ortsposition des Messpunktes berechnet wird.

Entsprechende Ausführungen zum erfindungsgemäßen Verfahren und dessen Vorteilen wurden bereits im Zusammenhang mit der erfindungsgemäßen Messeinrichtung erläutert. Besonders erwähnt sei an dieser Stelle, dass die Ermittlung der Ortsposition der Inspektionseinrichtung bei Auftreten, also z.B. bei steigender oder fallender Flanke eines binären Messsignals ermittelt wird. Die Verfahrbewegung der Inspektionseinrichtung muss hierbei nicht unterbrochen werden und das Verfahren ist schnell durchführbar.

In einer Verfahrensvariante wird bei Auftreten des Messsignals die Verfahrbewegung des Instrumententrägers gestoppt, und bei Stillstand des Instrumententrägers der Abstand zwischen Instrumententräger und Messpunkt und die Position des Instrumententrägers ermittelt und an die Recheneinrichtung übermittelt. Dynamische Messfehler während Verfahrbewegungen des Instrumententrägers sind so ausgeschlossen, das gesamte System ruht und sowohl die Position des Instrumententrägers als auch der tatsächliche Abstand zwischen Instrumententräger und Messpunkt werden bei Stillstand des Instrumententrägers ermittelt und an die Recheneinrichtung übermittelt, wo die letztendliche Berechnung der Ortsposition des Messpunktes stattfindet. Bei dieser Verfahrensvariante wird also nicht von dem vorbestimmten (Soll-) Abstand zwischen Instrumententräger und Messpunkt ausgegangen, sondern deren tatsächlicher Abstand im Moment der Positionsbestimmung des Instrumententrägers ermittelt. Das Verfahren wird hierdurch genauer.

Für eine weitere Beschreibung der Erfindung wird auf die Ausführungsbeispiele der Zeichnungen verwiesen. Es zeigen jeweils in einer Prinzipskizze
- Fig. 1: eine Messeinrichtung für Brennelemente in einem Brennelementlagerbecken,
- Fig. 2: im Detail II aus Fig. 1 den Signalgeber aus Fig. 1 in einer mechanischen Ausführung gemäß Stand der Technik, vom Brennelement beabstandet in Seitenansicht (a), und an das Brennelement angefahren in Draufsicht (b),
- Fig. 3: Ausgangssignale verschiedener Signalgeber, aufgetragen über dem Abstand des Instrumententrägers vom Brennelement,
- Fig. 4: im Detail II aus Fig. 1 den Signalgeber aus Fig. 1 in einer berührungslosen erfindungsgemäßen Ausführungsform beabstandet vom Brennelement.

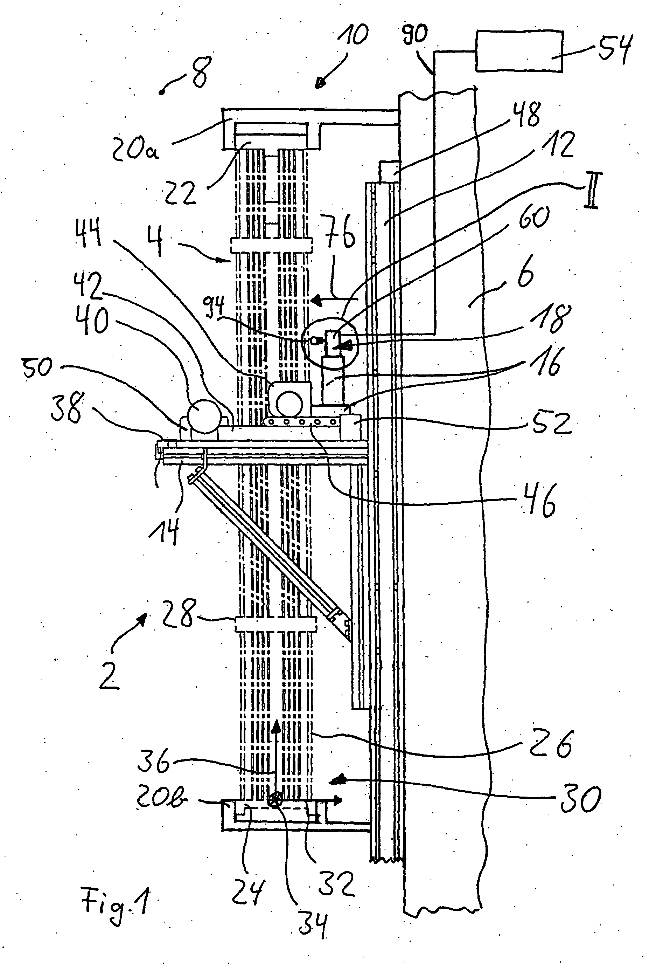

Fig. 1 zeigt eine Messeinrichtung 2 zur Vermessung eines Brennelements 4 in einem Kernkraftwerk. Die Messeinrichtung 2 ist fest an der Wand 6 im Inneren 8 eines Brennelementlagerbeckens installiert. Sie umfasst eine zweiteilige Halterung 10 für das Brennelement 4, eine fest an der Wand 6 montierte Führungsschiene 12 und einen an der Führungsschiene 12 verfahrbaren Gerätetisch 14. Auf dem Gerätetisch 14 ist ein relativ zu diesem in zwei orthogonale Raumrichtungen verfahrbarer Instrumententräger 16 montiert und auf diesem wiederum ein Signalgeber 18.

Die Halterung 10 umfasst eine obere Spannzange 20a und eine untere Spannzange 20b. In den beiden Spannzangen 20a,b sind respektive Kopf 22 und Fuß 24 des Brennelements fest eingespannt, so dass dieses relativ zur Wand 6 ortsfest fixiert ist. Sich beim Betrieb des Brennelements 4 im Kernreaktor verformende Brennelementkomponenten wie Steuerstabführungsrohre 26 und Abstandhalter 28 des Brennelements 4 sind somit frei zugänglich.

Beim in Fig. 1 dargestellten Brennelement 4 handelt es sich um ein Brennelement eines Druckwasserreaktors, stellvertretend für sämtliche Arten und Ausführungsformen von Brennelementen, z.B. auch die eines Siedewasserreaktors. In diesem Fall wäre z.B. dessen äußerer Brennelementkasten frei zugänglich.

Die Spannzange 20b ist in Bezug zur gesamten Messeinrichtung 2 so platziert, dass bei eingespanntem Brennelement 4 im Zentrum der Oberseite dessen Fußes 24 ein kartesisches Koordinatensystem 30 seinen Ursprung hat. Die X-Achse 32 und Y-Achse 34 verlaufen hierbei planparallel zur Oberfläche 38 des Gerätetisches 14, die Z-Achse 36 parallel zur Führungsschiene 12. Da somit der gesamte Gerätetisch 14 mit sämtlichen darauf montierten Aufbauten entlang der Z-Achse 36 verschiebbar ist, ist auf diesem ein X-Antrieb 40 mit zugehöriger X-Schiene 42 und wiederum auf dieser ein Y-Antrieb 44 mit zugehöriger Y-Schiene 46 montiert. Der Instrumententräger 16 ist wiederum auf der Y-Scheine 46 montiert und daher bzgl. Des Gerättisches 14 in X- und Y-Richtung verfahrbar.

Führungsschiene 12, X-Schiene 42 und Y-Schiene 46 sind jeweils mit Wegaufnehmern 48, 50, und 52 versehen, welche die jeweilige Ortsposition der darauf verschiebbaren Element aufnehmen und mit einer Recheneinrichtung 54 außerhalb des Brennelementslagerbeckens verbunden sind. In der Recheneinrichtung 54 ist deshalb zu jedem Zeitpunkt die exakte Ortsposition des Instrumententrägers 16 im Koordinatensystem 30 bekannt.

Die gesamte, bisher beschriebene Anordnung ist im betreffenden Kernkraftwerk dauerhaft und fest installiert, da der Instrumententräger 16 zu jedweder Inspektion oder Manipulationen von Brennelementen mit verschiedensten Einrichtungen, wie Fernsehkameras, Greifern, Manipulatoren, Werkzeugen, Messeinrichtungen usw. ausrüstbar ist. Um für all diese Aufgaben stets Ortspositionen mit hoher Genauigkeit anfahren zu können, sind alle Komponenten stabil ausgeführt und deren Dimensionen genau bekannt. Die fest installierten Wegaufnehmer 48, 50 und 52 arbeiten genau, und sind kalibriert, so dass durch das Koordinatensystem 30 ein genaues Koordinatensystem zur Verfügung steht, in dem die Ortsposition des Instrumententrägers 16 genau bekannt ist.

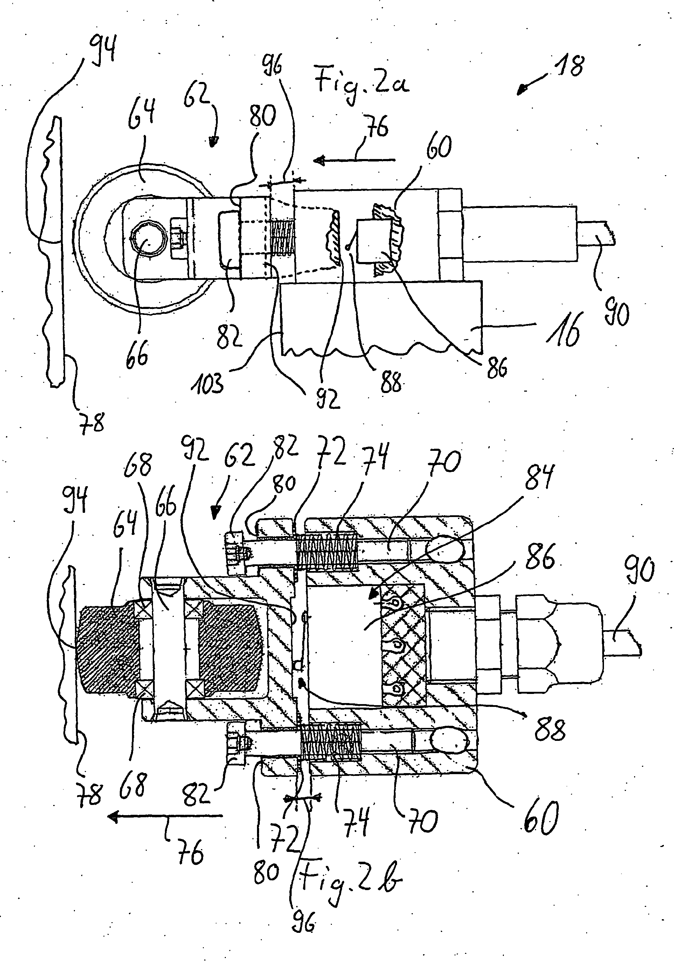

Für die Vermessung des Brennelements 4 im Koordinatensystem 30 ist nun auf dem Instrumententräger 16 der Signalgeber 18 mit seinem Gehäuse 60 fest montiert. Die Figuren 2a und 2b zeigen einen Signalgeber in mechanischer Ausführung gemäß Stand der Technik im Detail. Der Signalgeber 18 enthält einen an seinem Gehäuse 60 beweglich gelagerten Tastfinger 62 mit einer Andruckrolle 64. Die Andruckrolle 64 ist auf einer im Tastfinger 62 fest montierten Achse 66 mit Kugellagern 68 um diese drehbar gelagert. Der gesamte Tastfinger 62 wiederum ist auf im Gehäuse 60 fest verschraubten Bolzen 70 in deren Axialrichtung verschiebbar mit Gleitlagern 72 gelagert. Der Tastfinger 62 ist hierbei auf den Bolzen 70 mit Federn 74 in Richtung des Pfeils 76, also vom Gehäuse 60 weg, vorgespannt.

In Fig. 2a steht die Andruckrolle 64 nicht in Kontakt mit einer Außenfläche 78 des Brennelements 4, stellvertretend für z.B. dessen Abstandshalter 28 oder Steuerstabführungsrohr 26. Die Anschlagfläche 80 des Tastfingers 62 liegt deshalb am Kopf 82 des Bolzens 70 an, dieser ist also vollständig ausgefedert.

In Fig. 2b hingegen ist eine Situation dargestellt, in der der Signalgeber 18 in Richtung des Pfeils 76 gegen das Brennelement 4, bzw. dessen Außenwand 78 angefahren ist, weshalb der Tastfinger 62 gegenüber dem Gehäuse 60 eingefedert ist, so dass die Anschlagfläche 80 sich vom Kopf 82 abhebt. Durch die Relativbewegung zwischen Tastfinger 62 und Gehäuse 60 wird ein Schalter 84, bzw. dessen am Schaltergehäuse 86 beweglich gelagerte Schaltzunge 88 durch die Anlagefläche 92 betätigt, woraufhin der Schalter 84 über eine Signalleitung 90 ein elektrisches Schaltsignal "1" an die Recheneinrichtung 54 übermittelt. In Fig. 2 a ist die Schaltzunge 88 entlastet, weshalb über die Leitung 90 kein Signal bzw. das Schaltsignal "0" zur Recheneinrichtung 54 übermittelt wird. In Fig. 2a ist dies symbolisch dargestellt, indem die Anlagefläche 92 die Schaltzunge 88 freigibt.

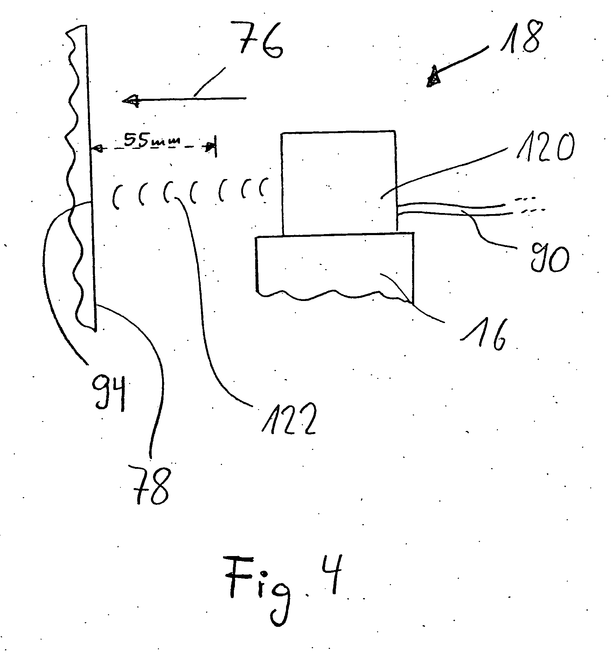

Fig. 4 zeigt, wie auf dem Instrumententräger 16 als Signalgeber 18 nicht derjenige aus Fig. 2a,b montiert ist, sondern ein berührungsloser Abstandssensor 120, der zum Brennelement 4 hin, also ebenfalls in Richtung des Pfeils 76, ausgerichtet ist. Der Abstandssensor misst den Abstand zur Außenfläche 78 mit einer Ultraschallwelle 122.

Um einen Messwert am Brennelement 4 aufzunehmen, wird zunächst der Signalgeber 18 vor einer ausgewählten Messstelle 94 am Brennelement4 positioniert und zwar derart, dass die Messstelle 94 in Richtung des Pfeils 76, also in Fig. 2a und 2b in Axialrichtung der Bolzen 70 vor der Andruckrolle 64 zu liegen kommt. Das Anfahren der Messstelle 94 erfolgt hierbei unter Beobachtung einer nicht dargestellten Kamera durch Verfahren des Instrumententrägers 16 an der Führungsschiene 12 bzw. der X-Schiene 42 und der Y-Schiene 42. Die nun erreichte Position ist in Fig. 2a und Fig. 4 zu sehen.

Anschließend wird der Instrumententräger 16 und mit ihm der Signalgeber 18 in Richtung des Pfeils 76 durch alleinige Verfahrung entlang der X-Schiene 42 mit dem X-Antrieb 40 auf die Messstelle 94 zu bewegt. Nach Berührung der Andruckrolle 64 mit der Messstelle 94 bewegt sich die Andruckrolle 64 und mit ihr der Tastfinger 62 nicht mehr weiter in Richtung des Pfeils 76 auf die Messstelle 94 zu. Das Gehäuse 60 jedoch, welches auf dem Instrumententräger 16 befestigt ist, hält in seiner Bewegung nicht inne. Deshalb gleitet der Tastfinger 62 auf dem Gleitlagern 72 entlang der Bolzen 70. Von der Anlagefläche 92 wird so die Schaltzunge 88 des Schalters 84 betätigt.

An einer bestimmten, später näher erläuterten Stelle der eben beschriebenen Bewegung ändert der Schalter 86 seinen Schaltzustand von "0" nach "1" bzw. gibt der Abstandsmesser 120 ein bestimmtes Abstandssignal ab, welches dem vorbestimmbaren Abstand entspricht. Über die Zuleitung 90 wird das Schalt- oder Abstandssignal an die Recheneinrichtung 54 übermittelt.
In diesem Moment wird die Verfahrbewegung des Instrumententrägers 16 gestoppt. Die Position des Instrumententrägers 16 wird anschließend aus den Wegaufnehmern 48, 50 und 52 ausgelesen und ebenfalls an die Recheneinrichtung 54 übermittelt. Da der Schaltzeitpunkt des Schalters 84 bzw. das Abstandssignal genau bekannt ist und mit diesem der definierte Abstand 96 zwischen Gehäuse 60 und Tastfinger 62, darüber hinaus über die Positionsaufnehmer 48, 50 und 52 die Position des Gehäuses 60 und der bekannte Abstand zwischen Tastfinger 62 und Messstelle 94 wird in der Recheneinrichtung 54 die genaue Position der Messstelle 94 im Koordinatensystem 30 berechnet.

In Fig. 4 wird das Messsignal 100 so im Abstandssensor 120 oder der Recheneinrichtung 54 erzeugt, dass dieses beim Abstand von 55 mm zwischen Abstandssensor 120 und Außenfläche 78 von "0" und "1" wechselt.

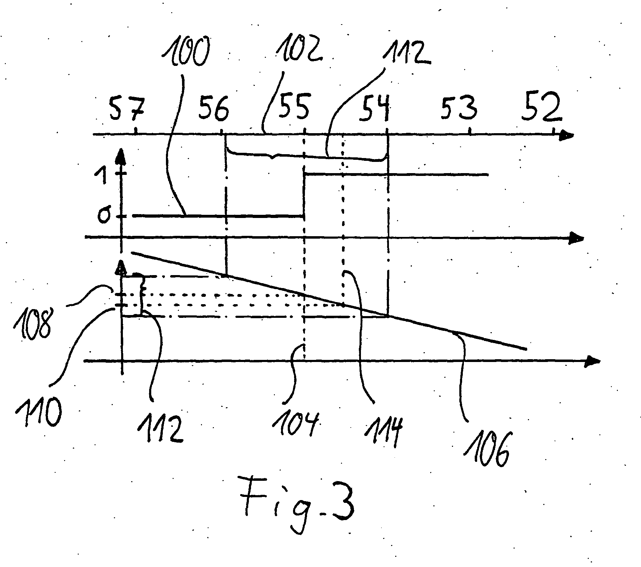

Fig. 3 zeigt das Schaltsignal 100 des Schalters 86 bei Annährung des Signalgebers 18 an die Messstelle 94. Auf der Achse 102 ist der X-Abstand 96 zwischen der Vorderseite 103 des Instrumententrägers und der Messstelle 94 aufgetragen. Dieser beträgt mehr als 57 mm, so lange die Andruckrolle 64 nicht am Brennelement 4 anliegt. Mit Beginnen des Einfederns der Federn 74 verringert sich der Abstand 96 kontinuierlich. Der Schalter 84 bleibt weiterhin an seiner einen Schaltposition "0", weshalb dieser immer noch auf der Ausgangsleitung 90 ein Schaltsignal 100 von "0" ausgibt.

Die Mechanik des Schalters 84 ist so beschaffen, dass dieser bei einem Abstand 96 von genau 5mm sein Schaltsignal 100 von "0" nach "1" wechselt. Dies entspricht einem Abstand 104 von 55 mm auf der Achse 102.

Alternativ zu oben werden ohne die Verfahrbewegung des Signalgebers 18 zu stoppen, genau in diesem Zeitpunkt, welcher mit Erreichen des Abstandes 104 eintritt, die aktuellen Werte der Wegaufnehmer 48, 50 und 52 ausgelesen. Erst bei einem Abstand 96 von ca. 3 mm wird die Verfahrbewegung gestoppt und in die andere Richtung umgekehrt, der Signalgeber 18 wieder vom Brennelement 4 weggefahren und zum nächsten Messpunkt verfahren.

Gemäß Fig. 4 liefert der berührungslose Abstandsgeber 120 als Funktion seines Abstandes vom Brennelement 4 ein Signal, dessen Verlauf als Abstandssignal 106 in Fig. 3 dargestellt ist. Statt des Schaltsignals 100 kann an die Recheneinrichtung 54 kontinuierlich das Abstandssignal 106 über die Signalleitung 90 übermittelt werden. Das Schaltsignal 100 wird dann dort erzeugt.

Dort wird dann nicht der Schaltzeitpunkt des Schaltsignals 100, sondern das Erreichen des Schwellwertes 108 überwacht, und zu diesem Zeitpunkt die Position des Instrumententrägers 18 gewonnen.

Wird ein Messverfahren verwendet, bei dem zunächst bei Erreichen des Schwellwertes 108 die Verfahrbewegung des Signalgebers 18 gestoppt wird, so besitzt die Messeinrichtung 2 eventuell einen geringen mechanischen Nachlauf, weshalb beim tatsächlichen Stillstand des Signalgebers 18 dieser dann einen tatsächlichen Wert 110 des Abstandssignals 106 liefert. Über die bekannte Kennlinie des Abstandsgebers, die nur einen sehr engen Bereich 112 um den Schwellwert 108 kalibriert sein muss, wird in diesem Fall ein tatsächlicher Abstand 114 von 54,5 mm zum Messpunkt 94 ermittelt. Dieser korrigierte Messwert geht in die Berechnung der Ortsposition der Messstelle 94 ein.

Vor einer entsprechenden Vermessung eines Brennelements 4 durch die Messeinrichtung 2 sind entsprechende Kalibiervorgänge, z.B. an einem Brennelement 4 mit bekannten Abmessungen oder einem in den Figuren nicht dargestellten Kalibrierstandard, z.B. zur Aufnahme der in Fig. 3 dargestellten Kennlinien in Form der Schaltsignale 100 oder des Abstandssignals 106 für den Signalgeber 18 aufzunehmen. Entsprechende Verfahren sind hinreichend bekannt und werden hier nicht näher erläutert.

## Patentansprüche

1. Messeinrichtung zur Vermessung eines Brennelements (4) in einem Kernkraftwerk, mit einer das Brennelement (4) in einer Halterung (10) fixierenden Inspektionseinrichtung (2), wobei die Inspektionseinrichtung (2) einen relativ zur Halterung (10) verfahrbaren Instrumententräger (16) und einen an eine Recheneinrichtung (54) angeschlossenen Positionsaufnehmer (48,50,52) zur Ermittlung einer Position des Instrumententrägers (16) relativ zur Halterung (10) enthält,
**gekennzeichnet durch**
einen auf dem Instrumententräger (16) montierten Signalgeber (18) zur Abgabe eines Messsignals (100) an die Recheneinrichtung (54) bei Erreichen eines vorbestimmbaren Abstandes (104) zwischen dem Instrumententräger (16) und einem Messpunkt (94) am Brennelement (4), wobei der Signalgeber (16) einen berührungslosen, ein Abstandssignal (106) erzeugenden Abstandsgeber enthält.

2. Messeinrichtung nach Anspruch 1, bei der Signalgeber (16) einen Schwellwertschalter für das Abstandssignal (106) enthält.

3. Verfahren zur Vermessung eines Brennelements in einem Kernkraftwerk, bei dem
- das Brennelement (4) in einer Halterung (10) einer Inspektionseinrichtung (2) fixiert wird,
- ein Instrumententräger (16) der Inspektionseinrichtung (2) relativ zum Brennelement (4) verfahren wird,
**dadurch gekennzeichnet, dass**
- bei Erreichen eines vorbestimmbaren berührungslos überwachten Abstandes (104) zwischen dem Instrumententräger (16) und einem Messpunkt (94) am Brennelement (4) ein Messsignal (100) an eine Recheneinrichtung (54) übermittelt wird,
- bei Auftreten des Messsignals (100) die Ortsposition des Instrumententräges (16) ermittelt und an die Recheneinrichtung (54) übermittelt wird,
- in der Recheneinrichtung (54) die Ortsposition des Messpunktes (94) berechnet wird.

4. Verfahren nach Anspruch 3, bei dem
- bei Auftreten des Messsignals (100) die Verfahrbewegung des Instrumententrägers (16) gestoppt wird,
- bei Stillstand des Instrumententrägers (16) der Abstand (114) zwischen Instrumententräger (16) und Messpunkt (94), und die Position des Instrumententrägers (16) ermittelt und an die Recheneinrichtung (54) übermittelt wird.

## Claims

1. Measuring device for measuring a fuel assembly (4) in a nuclear power plant, having an inspection device (2) which fixes the fuel assembly (4) in a holder (10), wherein the inspection device (2) contains an instrument carrier (16), which can be displaced relative to the holder (10), and a position sensor (48, 50, 52) connected to a computer device (54) for ascertaining a position of the instrument carrier (16) relative to the holder (10), **characterized by** a signal transmitter (18) fitted to the instrument carrier (16) for transmitting a measurement signal (100) to the computer device (54) when a predeterminable distance (104) between the instrument carrier (16) and a measurement point (94) on the fuel assembly (4) has been reached, the signal transmitter (16) containing a contactless distance transmitter which generates a distance signal (106).

2. Measurement device according to Claim 1, in which the signal transmitter (16) contains a threshold value switch for the distance signal (106).

3. Method for measuring a fuel assembly in a nuclear power plant, in which
- the fuel element (4) is fixed in a holder (10) of an inspection device (2),
- an instrument carrier (16) of the inspection device (2) is displaced relative to the fuel assembly (4),
**characterized in that**
- when a predeterminable distance (104), which is monitored contactlessly, between the instrument carrier (16) and a measurement point (94) on the fuel assembly (4) is reached, a measurement signal (100) is transferred to a computer device (54),
- when the measurement signal (100) occurs, the physical position of the instrument carrier (16) is ascertained and transferred to the computer device (54), and
- the physical position of the measurement point (94) is calculated in the computer device (54).

4. Method according to Claim 3, in which
- when the measurement signal (100) occurs, the displacement movement of the instrument carrier (16) is stopped,
- when the instrument carrier (16) comes to a standstill, the distance (114) between instrument carrier (16) and measurement point (94), and the position of the instrument carrier (16) is ascertained and transferred to the computer device (54).

## Revendications

1. Dispositif de mesure d'un assemblage (4) combustible dans une centrale nucléaire, comprenant un dispositif (2) d'inspection immobilisant l'assemblage (4) combustible dans une fixation (10), le dispositif (2) d'inspection comportant un porte-instrument (16) pouvant être déplacé par rapport à la fixation (10) et un enregistreur (48, 50, 52) de position, qui est raccordé à un dispositif (54) informatique et qui est destiné à déterminer une position du porte-instrument (16) par rapport à la fixation (10),
**caractérisé par** un générateur (18) de signal monté sur le porte-instrument (16) pour envoyer un signal (100) de mesure au dispositif (54) informatique lorsqu'une distance (104) pouvant être déterminée à l'avance est atteinte entre le porte-instrument (16) et un point (94) de mesure sur l'élément (4) combustible, le générateur (16) de signal comportant un indicateur de distance produisant un signal (106) de distance sans contact.

2. Dispositif de mesure suivant la revendication 1 dans lequel le générateur (16) de signal comporte un interrupteur à valeur de seuil pour le signal (106) de distance.

3. Procédé de mesure d'un assemblage combustible dans une centrale nucléaire, dans lequel
- on immobilise l'assemblage (4) combustible dans une fixation (10) d'un dispositif (2) d'inspection,
- on déplace un porte-instrument (16) du dispositif (2) d'inspection par rapport à l'assemblage (4) combustible,
**caractérisé en ce que**
- lorsqu'une distance (104) à contrôler sans contact et pouvant être déterminée à l'avance est atteinte entre le porte-instrument (16) et un point (94) de mesure sur l'assemblage (4) combustible, on transmet un signal (100) de mesure à un dispositif (54) informatique,
- on détermine lorsque qu'apparaît le signal (100) de mesure la position dans l'espace du porte-instrument (16) et on la transmet au dispositif (54) informatique,
- on calcule dans le dispositif (54) informatique la position dans l'espace du point (94) de mesure.

4. Procédé suivant la revendication 3 dans lequel
- lorsque le signal (100) de mesure apparaît on arrête le mouvement de déplacement du porte -instrument (16),
- lorsque le porte-instrument (16) est à l'arrêt on détermine la distance (114) entre le porte-instrument (16) et le point (94) de mesure et la position du porte-instrument (16) et on la transmet au dispositif (54) informatique.
